# EUROPÄISCHE PATENTSCHRIFT

(11) **EP 1 500 802 B1**
(45) Veröffentlichungstag und Bekanntmachung des Hinweises auf die Patenterteilung: **16.01.2008**
(21) Anmeldenummer: 04103375.4
(22) Anmeldetag: 14.07.2004
(51) Int. Cl.: F01P 9/06, F02G 5/00, F02M 25/07, F02B 29/04

(54) **Kühlanordnung**
Cooling device
Dispositif de refroidissement

(30) Priorität: 22.07.2003 DE 10333219
(43) Veröffentlichungstag der Anmeldung: 26.01.2005
(73) Patentinhaber: DEERE & COMPANY, Moline, Illinois 61265-8098 (US)
(72) Erfinder: Tarasinski, Nicolai, 67227, Frankenthal (DE); Sobotzik, Joachim, 67245, Lambsheim (DE)
(74) Vertreter: Holst, Sönke

(56) Entgegenhaltungen:
- CH-A- 248 927
- DE-A- 19 900 965
- US-A- 1 806 712
- US-A- 2 725 044
- US-B2- 6 543 411

## Beschreibung

Die Erfindung betrifft eine Kühlanordnung für ein mit einem Verbrennungsmotor betriebenes landwirtschaftliches Fahrzeug, vorzugsweise für einen Schlepper, mit wenigstens einem ein Kühlmedium enthaltendes Hauptkühlsystem, einem an sich bekannten Sorptionskühlsystem, welches wenigstens einen Verdampfer für ein zu verdampfendes Kältemittel, eine ein Sorbens enthaltende Sorbtionskammer zur Sorption des Kältemitteldampfes, eine Desorptionskammer zur Desorption des Kältemittels aus dem Sorbens und einen Kondensator zur Kondensation des Kältemittels enthält, wobei zur Bereitstellung der zur Desorption erforderlichen Wärme wenigstens ein erster Abgasstrom des Verbrennungsmotors der Desorptionskammer zugeführt wird und der Verdampfer zur zusätzlichen Kühlung des Kühlmediums des wenigstens einen Hauptkühlsystems und/oder zur Kühlung eines Kabinenluftstroms in einem als Klimatisierungssystem ausgebildeten Hauptkühlsystem und/oder zur Kühlung eines zweiten Abgasstroms des Verbrennungsmotors verwendet wird.

Steigende Leistung der Verbrennungsmotoren und verschärfte Emissionsgesetzgebungen führen zu immer höheren Anforderungen an das Kühlsystem eines Fahrzeugs. Die über ein herkömmliches Kühlsystem abführbare Wärmeleistung wird im Wesentlichen durch Parameter wie die Größe einer Kühleroberfläche, Wärmeübergangszahlen, Strömungsgeschwindigkeiten des Kühlmediums sowie durch Temperaturdifferenzen der beteiligten Medien (Umgebung, Kühlflüssigkeit etc.) bestimmt. Bei landwirtschaftlichen Fahrzeugen, insbesondere bei Schleppern, werden die über ein konventionelles Kühlsystem abführbaren Leistungen im Wesentlichen durch den zur Verfügung stehenden Bauraum und die maximal zulässige Temperaturdifferenz begrenzt. Für ein auf Wasserkühlung basierendes Kühlsystem ergibt sich diese maximale Temperaturdifferenz aus der maximalen Umgebungstemperatur und der höchsten zulässigen Kühlwassertemperatur.

Im Stand der Technik sind verschiedene Kühlsysteme bekannt, mit denen eine effizientere Kühlung bei maximal vorherrschenden Temperaturdifferenzen erzielt werden soll. Beispielsweise wird in der DE 198 54 544 ein Kühlsystem für eine aufgeladene Brennkraftmaschine beschrieben, durch dass eine Verbesserung der Kühlleistung erzielt werden soll. Das Kühlsystem enthält einen Hochtemperaturkreislauf und einen Niedertemperaturkreislauf, wobei der Hochtemperaturkreislauf in einem Hauptzweig die Brennkraftmaschine und einen Hochtemperaturrückkühler sowie in einem Nebenzweig einen Hochtemperaturladeluftkühler und wobei der Niedertemperaturkreislauf einen Niedertemperaturrückkühler und einen dazu in Reihe geschalteten Niedertemperaturladeluftkühler umfasst. Des Weiteren ist ein Motoröl/Getriebeölwärmetauscher sowie ein Wärmetauscher zum Kühlen von Elektronikkomponenten enthalten. Dadurch soll einerseits die im Motoröl/Getriebeölwärmetauscher auftretende Abwärme auf einem relativ hohen Temperaturniveau abgeführt werden können, während andererseits gleichzeitig eine Kühlung der Elektronikkomponenten und der Ladeluft auf einem niedrigeren Temperaturniveau gewährleistet sein soll. Nachteilig wirkt sich aus, dass dieses Kühlsystem einen erheblichen konstruktiven Aufwand erfordert und die sich einstellenden Temperaturniveaus zur Kühlung einer aufgeladenen Brennkraftmaschine eines landwirtschaftlichen Schleppers ungeeignet sind.

Des Weiteren sind andere Kühlsysteme bekannt, die auf dem Prinzip der Sorptionskühlung basieren, bei der die Erzeugung von Kälte aus Wärme im Vordergrund steht und zunehmend im Bereich der Fahrzeugtechnik, insbesondere in Verbindung mit der Klimatisierung von Fahrzeugen, an Bedeutung gewinnen. Insbesondere werden Adsorptions- und Absorptionskältemaschinen eingesetzt, deren Funktions- und Arbeitsweise in verschiedenen Veröffentlichungen beschrieben werden (z.B. Andreas Gassel, "Die Adsorptionskältemaschine - Betriebserfahrungen und thermodynamische Berechnung"; Artikelentwurf für Ki Luft- und Kältetechnik oder YORK International, "Prinzip Absorptionskältemaschine", Prospekt Nr. KK14300). In der DE 199 27 879 A1 wird beispielsweise ein Verfahren zur Klimatisierung von Fahrzeugen und eine Adsorptionskälteanlage zur Durchführung des Verfahrens offenbart. Das Verfahren beruht auf dem Einsatz einer Adsorptionskälteanlage, bei der flüssiges Kältemittel verdampft wird, um die dafür erforderliche Wärme einem flüssigen oder gasförmigen Medium zur Kälteerzeugung zu entziehen. Das verdampfte Kältemittel wird einem Sorbens zur Adsorption zugeführt. Das mit dem Kältemittel beladene Sorbens wird erwärmt, um das Kältemittel wieder zu desorbieren, und das Kältemittel wird anschließend verflüssigt, um zur erneuten Verdampfung zur Verfügung zu stehen. Zur Erwärmung des Sorbens wird dabei die Abwärme des Motors genutzt. Das erfindungsgemäße Verfahren und die zugehörige Adsorptionskälteanlage zeichnen sich dadurch aus, dass als Kältemittel Methanol und als Sorbens Aktivkohle eingesetzt werden. Nachteilig wirkt sich aus, dass die hier vorgeschlagene Adsorptionskälteanlage zur Klimatisierung eines Fahrzeugs ausgebildet ist und zur Kühlung einzelner Komponenten einer aufgeladenen Verbrennungskraftmaschine, insbesondere der eines landwirtschaftlichen Schleppers ungeeignet erscheint. Des Weiteren kommt eine Nutzung anderer Wärmepotentiale des Fahrzeugs für die Bereitstellung der zur Desorption erforderlichen hohen Temperaturen, wie beispielsweise der Abgaswärme, mit der in der DE 199 27 879 A1 offenbarten Adsorptionskältemaschine aufgrund der hierfür erforderlichen aufwendigen konstruktiven Maßnahmen nicht in Frage.

Ferner wird in der US 1,806,712 A ein Kühlsystem offenbart, welches für die Kühlung eines Verbrennungsmotors mit Kühlmittel geeignet ist, wobei ein Sorptionskühlsystem vorgesehen ist, welches unter anderem einen Verdampfer, eine Sorptionskammer, eine Desorptionskammer sowie einen Kondensator für ein Kältemittel aufweist.

Die der Erfindung zugrunde liegende Aufgabe wird darin gesehen, eine Kühlanordnung der eingangs genannten Art anzugeben, durch welche die vorgenannten Probleme überwunden werden. Insbesondere soll eine Kühlanordnung vorgeschlagen werden, durch die ein vorhandenes konventionelles Hauptkühlsystem, beispielsweise ein Kühlsystem für einen Motorblock oder ein Ladeluftkühlsystem, entlastet wird bzw. die für das Hauptkühlsystem anfallende Wärmeleistung reduziert wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist in einer Kühlanordnung der eingangs genannten Art der erste Abgasstrom des Verbrennungsmotors ein Abgasstrom eines Abgasrückführsystems. Auf diese Weise wird einem im Fahrzeug installierten Abgasrückführsystem die zur Desorption erforderliche Desorptionswärme entzogen. Dies hat den Vorteil, dass sich das rückgeführte Abgas abkühlt und bei der Rückführung in den Verbrennungsraum des Verbrennungsmotors sich eine reduzierte Erwärmung der Ladeluft einstellt und somit eine verbesserte Aufladung bzw. verbesserte Emissionswerte bei der Verbrennung erzielt werden können. Eine alternative Ausgestaltung der Erfindung sieht vor, dass das Hauptkühlsystem ein Klimatisierungskühlsystem ist und der Verdampfer des Sorptionskühlsystems zur zusätzlichen Kühlung eines Kabinenluftstroms verwendet wird. Vorteilhaft ist dabei, dass ein für das Klimatisierungskühlsystem vorhandener Kompressor kleiner ausgebildet werden kann und damit weniger mechanische Leistung dem Fahrzeug entzogen werden muss. Dies wiederum führt zu einer verbesserten Gesamtenergiebilanz des Fahrzeugs und damit auch zu einem geringeren Kraftstoffverbrauch.

Durch die Kombination eines Hauptkühlsystems, welches ein konventionelles Kühlsystem darstellt, mit einem Sorptionskühlsystem, kann auf besonders vorteilhafte Weise das Hauptkühlsystem unter Einsatz des Verdampfers entlastet und die dort anfallende Wärmeleistung reduziert werden. Vorteilhaft ist z. B. die Positionierung des Verdampfers am Zylinderkopf und damit die direkte Kühlung des Zylinderkopfes des Verbrennungsmotors, so dass die dort anfallende Wärme das konventionelle Hauptkühlsystem nicht voll belastet. Die im Kreisprozess des Sorptionskühlsystem erforderliche Abfuhr der aufgenommenen Wärme bzw. die zur Entlastung des konventionellen Hauptkühlsystems durch den Verdampfer abgeführte Wärmeleistung kann dabei auf einem wesentlich höheren Temperaturniveau bei der Kondensation des Kältemittels an die Umgebung abgegeben werden. Dadurch können höhere Temperaturdifferenzen zur Umgebung realisiert und damit eine kompaktere Bauweise für die erforderlichen Kühler mit verbesserten Integrationsmöglichkeiten im Fahrzeug erzielt werden.

Erfindungsgemäß kann auch anderen Komponenten durch entsprechende Positionierung des Verdampfers Wärme entzogen werden, wie z. B. dem Verbrennungsmotor selbst, Teilen der mechanischen Leistungsübertragung, Komponenten der Leistungselektronik, elektrischen Maschinen, der Fahrzeugkabine, der Ladeluft, einem rückgeführten Abgasstrom oder sonstigen anderen kühlbaren Komponenten, die im oder am Fahrzeug enthalten sind. Des Weiteren ist es auch denkbar die erfindungsgemäße Kühlanordnung zur Kühlung von Fluiden, wie beispielsweise Motor- oder Getriebeöl einzusetzen.

Das Sorptionskühlsystem entzieht dem Hauptkühlsystem, bzw. dem konventionellem Kühlsystem, unter Aufwand von Leistung Wärme. Als aufzuwendende Leistung für das Sorptionskühlsystem wird vorzugsweise thermische Leistung herangezogen. Damit wird durch ein Sorptionskühlsystem im Gegensatz zu den in Kühlmaschinen und auch in Klimaanlagen weitverbreiteten mechanisch angetriebenen Kompressoren ein sogenannter "thermischer Verdichter" realisiert.

Die zum Antrieb des Sorptionskühlsystems erforderliche thermische Leistung wird dem Fahrzeug entnommen, wobei vorzugsweise ein Abgasstrom des Verbrennungsmotors als Quelle thermischer Leistung genutzt wird. Andere Quellen für thermische Leistung sind jedoch auch denkbar. So kann beispielsweise auch die Abwärme des Verbrennungsmotors oder das Kühlwasser des Verbrennungsmotors oder eine andere verfügbare Wärmequelle im Fahrzeug genutzt werden.

In der Literatur (Brockhaus, Naturwissenschaften und Technik, 1989) wird der Vorgang der Sorption als ein Vorgang beschrieben, bei dem ein Stoff durch einen mit ihm in Berührung stehenden anderen selektiv aufgenommen wird, z. B. Absorption oder Adsorption. Man spricht immer dann von Sorption, wenn die Art des individuellen Prozesses unbekannt ist. Der sorbierende Stoff heißt Sorbens. Der sorbierte Stoff heißt Sorbent. Die Regenerierung des Sorbens, d. h. die Abtrennung des sorbierten Stoffes, heißt Desorption.

Im Wesentlichen unterscheidet man zwischen zwei bestimmten Formen der Sorption: der Absorption und der Adsorbtion.

Bei der Absorption handelt es sich um die Aufnahme von Gasen durch Flüssigkeiten (oder Feststoffe). Analog zur Sorbtion wird die gelöste Gaskomponente als Absorbend und die Flüssigkeit (Lösungsmittel) als Absorbens bezeichnet. Unter Desorption versteht man die Umkehrung der Absorption, d. h. das Austreiben des Gases bei erhöhter Temperatur und/oder erniedrigtem Druck unter Rückgewinnung des Lösemittels.

Bei der Adsorption handelt es sich um die Anlagerung von Gasen und gelösten Stoffen (Adsorbat) an der Oberfläche fester Körper (Adsorbens), z. B. die Bindung von Wasserdampf als Adsorbat an Aktivkohle, welches das Adsorbens darstellt. Die Adsorption spielt sich dabei nicht nur an der sichtbaren Oberfläche des Adsorbens ab, sondern auch in dessen Poren, soweit diese für das Adsorbat zugänglich sind. Bei der Adsorption wird die Adsorptions-Wärme, etwa im Ausmaß der Kondensationswärme frei. Wichtige Adsorbentien sind Aktivkohle, Kieselgel, Aktivtonerde (Aluminiumoxid) oder auch Silicagel und Bleicherde.

Generell spricht man von Desorption, wenn es sich um die Umkehrung der Ab- bzw. Adsorption durch höhere Temperatur oder geringeren Druck bzw. der Rückgewinnung des ab- oder adsorbierten Stoffes handelt.

Im Folgenden werden zwei Sorptionskühlsysteme anhand von Funktionsprinzipien eines Absorptionskühlsystems und eines Adsorbtionskühlsystems beschrieben, wobei das Absorptionskühlsystem mit einem flüssigen Lösungsmittel als Sorbens bzw. Absorbens und das Adsorbtionskühlsystem mit einem festen Sorbens arbeitet. Für eine über die Funktionsprinzipien hinausgehende Beschreibung wird auf den eingangs diskutierten Stand der Technik (DE 199 27 879 A1) sowie auf Fachliteratur (z. B. Andreas Gassel, "Die Adsorptionskältemaschine - Betriebserfahrungen und thermodynamische Berechnung"; Artikelentwurf für Ki Luft- und Kältetechnik oder YORK International, "Prinzip Absorptionskältemaschine", Prospekt Nr. KK14300) verwiesen.

Kennzeichnend für ein Absorptionskältesystem ist ein Zweistoffsystem, bestehend aus einem Absorbens und einem Absorbend, wie z. B. einem Lösungsmittel und einem Kältemittel, wobei das Kältemittel von dem Lösungsmittel absorbiert wird und bei der Desorption wieder von ihm getrennt wird. Bekannte Zweistoffsysteme sind beispielsweise Lithiumbromid, das Wasser absorbiert oder Wasser, das Ammoniak absorbiert. Der absorbierte Stoff hat die Funktion des Kältemittels (Absorbend), während der andere Stoff als Lösungsmittel (Absorbens) bezeichnet wird. Kältemittel und Lösungsmittel werden zusammen als Arbeitspaar bezeichnet. Die Stoffe werden in der Desorptionskammer (Kocher oder Austreiber) voneinander getrennt, indem die Lösung erhitzt wird. Das Kältemittel verdampft aufgrund der geringeren Verdampfungstemperatur zuerst. Der Dampf des Kältemittels wird durch einen Flüssigkeitsabscheider von den mitverdampften Lösungsmittelresten befreit. Anschließend wird das Kältemittel in dem Kondensator (Verflüssiger) abgekühlt und somit verflüssigt. Durch ein Regelventil wird das Kältemittel auf einen einer vorgebbaren Temperatur entsprechenden Verdampfungsdruck entspannt. Im Verdampfer selbst wird das Kältemittel unter Aufnahme von Wärme verdampft, wodurch der eigentliche Nutzeffekt entsteht, indem die Aufnahme von Wärme den Kühlungseffekt bewirkt. Der Kältemitteldampf wird nun in die Sorptionskammer geleitet. Das Lösungsmittel (Absorbens) wird nach der Trennung vom Kältemittel (Absorbend) bzw. nach der Desorption durch ein Ventil auf den Sorptionskammerdruck entspannt, abgekühlt und der Sorptionskammer zugeführt. Dadurch ist es in der Lage, den Kältemitteldampf in der Sorptionskammer aufzunehmen. Eine Lösungsmittelpumpe führt die angereicherte Lösung zurück zum Austreiber, der Kreislauf ist damit geschlossen. Der gesamte Lösungsmittelkreislauf arbeitet als "thermischer Verdichter", da er die entsprechenden Aufgaben des Verdichters einer Kompressionskältemaschine übernimmt. Die zum Verdampfen notwendige Wärmemenge Q₀ und die zur Desorption notwendige Wärmemenge Q_{H} können, wie eingangs erwähnt, unterschiedlichen Fahrzeugkomponenten entzogen werden, so dass die von einem Hauptkühlsystem abzuführende Wärmeleistung reduziert wird, indem die zum Verdampfen notwendige Wärmemenge Q₀ dem Hauptkühlsystem entzogen wird. Das System arbeitet umso effektiver, je höher die Primärtemperatur und damit die Kühlwassertemperatur des Hauptkühlsystems ist. Die Bestrebung, das Druckniveau im Kühlkreislauf anzuheben, um entsprechend hohe zulässige Temperaturen zu erreichen, fördert daher die Einsatzmöglichkeiten von Absorptionskühlsystemen. Die Antriebstemperaturen für die Austreibung liegen zwischen 90°C und 140 °C, wobei das zu kühlende Medium bzw. die zu kühlende Komponente ähnliche Temperaturen annehmen kann wie bei der Kühlung mit einem Adsorptionskühlsystem.

Ein Adsorptionskühlsystem besteht aus einer mit einem Sorbens bzw. Adsorbens gefüllten Adsorptionskammer und einer mit einem Adsorbens gefüllten Desorptionskammer, sowie einem Kondensator und einem Verdampfer. Wie auch bei einem Absorptionskühlsystem sind bei einem Adsorptionskühlsystem verschiedene Stoffpaare möglich. Als Adsorbens wird beispielsweise Silicagel und als Kältemittel bzw. Adsorbat Wasser eingesetzt. Bekannt ist auch die Verwendung von Aktivkohle als Adsorbens und Methanol als Adsorbat. Der Prozess ist diskontinuierlich und geschlossen. Während eines Zyklus laufen folgende Vorgänge ab: Das an das Silicagel (Adsorbens) angelagerte Wasser (Adsorbat) wird in der Desorptionskammer unter Zufuhr einer Wärmemenge Q_{H} durch einen der Desorptionskammer zugeordneten Heizwasserkreislauf ausgetrieben. Das Wasser wird im Kondensator verflüssigt indem Wärme an ein dem Kondensator zugeordneten Kühlwasserkreislauf abgeführt wird. Das Kondensat wird in den Verdampfer eingesprüht und bei starkem Unterdruck verdampft. Dabei wird der Umgebung oder einer zu kühlenden Komponente eine Wärmemenge Q₀ entzogen bzw. die Umgebung oder die zu kühlende Komponente abgekühlt. In der Adsorptionskammer wird der Wasserdampf adsorbiert und die entstehende Adsorptionswärme einem der Adsorptionskammer zugeordneten Kühlwasserkreislauf zugeführt. Durch einfaches Umlenken der Heiz- und Kühlwasserkreisläufe der Desorptions- bzw. der Adsorptionskammer zwischen den beiden Kammern werden die Funktionen Desorption und Adsorbtion am Ende eines Zyklus vertauscht und der Prozess beginnt von Neuem.

Die Desorption des angelagerten Wassers und die Druckerzeugung für die Kondensation erfolgt bereits bei niedrigen Antriebstemperaturen von 60°C - 70°C, so dass diese Technologie auch auf einem gegenüber einem Absorptionskühlsystem geringeren Temperaturniveau eingesetzt werden kann.

Die erfindungsgemäße Kühlanordnung mit einem Sorptionskühlsystem hat den Vorteil, dass die erforderliche Antriebsleistung durch am Fahrzeug vorhandene Wärmequellen z. B. dem Abgas, "kostenfrei" zur Verfügung steht, im Gegensatz zu der bei Kompressoren erforderlichen mechanischen Leistung. Des Weiteren kann eine Reduzierung der im konventionellen Kühlsystem zu installierenden Kühlkapazität sowie eine Reduzierung der über einen Wasser-Luft-Wärmetauscher abzuführenden Verlustwärme des Verbrennungsmotors und damit eine Entlastung des Hauptkühlsystems erzielt werden, wobei die Möglichkeit einer Wärmeabfuhr auf einem gegenüber dem konventionellen Kühlsystem höheren Temperaturniveau besteht. Ferner kann eine Minimierung des Energiebedarfs für die Kühlung weiterer Komponenten und ein dafür verminderter Kraftstoffeinsatz erzielt werden. Außerdem besteht die Möglichkeit der Verwendung umweltunschädlicher Kältemittel. Des Weiteren können bei Vorhandensein einer Klimaanlage mechanische bzw. elektrische Antriebseinheiten für einen bisher benötigten Klimaanlagen-Kompressor eingespart bzw. kleiner dimensioniert werden. Weitere Vorteile sind, dass verschiedene Fluide und Traktorkomponenten auf Temperaturen unterhalb Umgebungstemperatur abgekühlt werden können. Ein weiterer Vorteil besteht darin, dass gegenüber der Verwendung eines Kühlsystems mit Kompressor weniger bewegte und damit weniger verschleißanfällige Teile in der Kühlanordnung enthalten sind. Bei der Anordnung eines Wärmetauschers außen am Abgasrohr des Fahrzeugs ist des Weiteren vorteilhaft, dass keine Erhöhung des Abgas-Staudruckes zu erwarten ist.

In einer weiteren bevorzugten Ausgestaltung der Erfindung ist der erste Abgasstrom des Verbrennungsmotors ein dem an die Umgebung abgegebenen Abgasstrom abgezweigter Abgasstrom. Auf diese Weise kann der ansonsten ungenutzte mit Wärmeenergie beladene Abgasstrom zum Antrieb der Desorbtionskammer genutzt werden wodurch die Gesamtenergiebilanz des Fahrzeugs verbessert wird.

Eine weitere besonders bevorzugte Ausgestaltung der Erfindung sieht vor, dass das Hauptkühlsystem ein Ladeluftkühlsystem ist und der Verdampfer des Sorptionskühlsystems zur zusätzlichen Kühlung des Ladeluftkühlsystems verwendet wird. Dadurch wird erreicht, dass das zur Kühlung der aufgeladenen Luft eingesetzte Ladeluftkühlsystem effizienter ausgebildet bzw. die Kühlleistung für die Ladeluft gesteigert werden kann und damit eine erhöhte Ladeluftmenge in den Verbrennungsraum des Verbrennungsmotors gelangt. Dadurch können verbesserte Emissionswerte erzielt werden.

Eine weitere besonders bevorzugte Ausgestaltung der Erfindung sieht vor, dass das Hauptkühlsystem ein Motorblockkühlsystem ist und der Verdampfer des Sorptionskühlsystems zur zusätzlichen Kühlung des Motorblockkühlsystems verwendet wird. Auf diese Weise kann das Hauptkühlsystem des Verbrennungsmotors entlastet werden. Dies kann entweder zur Reduzierung des erforderlichen Kühlervolumens oder bei Bedarf zur Erhöhung der gesamten Kühlkapazität ausgenutzt werden.

In einer weiteren bevorzugten Ausgestaltung der Erfindung ist der zweite Abgasstrom des Verbrennungsmotors ein Abgasstrom eines Abgasrückführsystems, wobei der Verdampfer des Sorptionskühlsystems zur Kühlung des Abgasstroms des Abgasrückführsystems verwendet wird. Auf diese Weise kann der konventionell ungenutzte mit Wärmeenergie beladene Abgasstrom zum Antrieb der Desorbtionskammer genutzt werden, wodurch die Gesamtenergiebilanz des Fahrzeugs verbessert wird. Des Weiteren wird der Vorteil geschaffen, dass sich das rückgeführte Abgas abkühlt und bei der Rückführung in den Verbrennungsraum des Verbrennungsmotors sich eine reduzierte Erwärmung der Ladeluft einstellt und somit eine verbesserte Aufladung bzw. verbesserte Emissionswerte bei der Verbrennung erzielt werden können.

In einer bevorzugten Ausgestaltung der Erfindung ist der Kondensator mit einem Kühler verbunden, mit dem die im Kondensator freigesetzte Wärme abführbar ist. Die durch die Kondensation des Kältemittels (Sorbent) entstehende Wärmemenge kann somit effizient an die Umgebung abgegeben werden, wobei der Wärmeübergang auf einem hohen Temperaturniveau erfolgen kann.

In einer weiteren bevorzugten Ausgestaltung der Erfindung ist die Sorptionskammer mit einem Kühler verbunden, mit dem die in der Sorptionskammer freigesetzte Wärme abführbar ist. Dadurch wird die durch die Sorption des Kältemittels (Sorbent) entstehende Wärmemenge effizient an die Umgebung abgegeben.

Anhand der Zeichnung, die vier Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: ein schematisches Blockschaltbild einer erfindungsgemäßen Kühlanordnung mit einem Sorptionskühlsystem zur Entlastung eines Ladeluftkühlkreislaufes,
- Fig. 2: ein schematisches Blockschaltbild der Stoffströme und Komponenten des zur Entlastung des Ladeluftkühlsystems eingesetzten Sorptionskühlsystems,
- Fig. 3: ein schematisches Blockschaltbild einer erfindungsgemäßen Kühlanordnung mit einem Sorptionskühlsystem zur Entlastung eines Verbrennungsmotorkühlkreislaufes,
- Fig. 4: ein schematisches Blockschaltbild einer erfindungsgemäßen Kühlanordnung mit einem Sorptionskühlsystem zur Kühlung eines Abgasrückführsystems und
- Fig. 5: ein schematisches Blockschaltbild einer erfindungsgemäßen Kühlanordnung mit einem Sorptionskühlsystem zur Entlastung eines Kabinenluftkühlsystems.

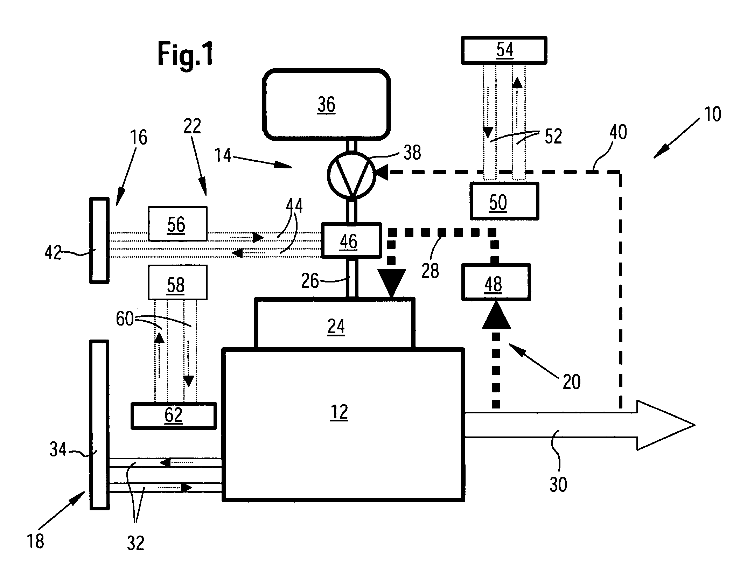

Fig. 1 zeigt eine erfindungsgemäße Kühlanordnung 10 für einen Verbrennungsmotor 12 mit einem Ladeluftsystem 14, einem Ladeluftkühlsystem 16, einem Verbrennungsmotorkühlsystem 18, einem Abgasrückführsystem 20 sowie einem Sorptionskühlsystem 22. Das Sorptionskühlsystem 22 wird hierbei wie abgebildet zur Entlastung des Ladeluftkühlsystems 16 eingesetzt.

Der Verbrennungsmotor 12 enthält ein Einlasssystem 24, welches mit aufgeladener und gekühlter Luft 26 und rückgeführtem Abgas 28 versorgt wird. Das rückgeführte Abgas 28 wird aus dem Verbrennungsmotor 12 ausströmenden Abgasstrom 30 entnommen und dem Einlasssystem 24 des Verbrennungsmotors 12 zugeführt. Durch das Abgasrückführsystem 20 können die Menge des an die Umgebung abgegebenen Abgasstroms 30 reduziert und die Emissionswerte verbessert werden.

Zur Kühlung des Verbrennungsmotors 12 wird das Verbrennungsmotorkühlsystem 18 mit dem Verbrennungsmotor 12 über Kühlmittelleitungen 32 verbunden. Dabei sind die Kühlmittelleitungen 32 mit einem Motorkühler 34 verbunden, so dass ein sich in den Kühlmittelleitungen 32 befindliches Kühlmedium (nicht gezeigt) zwischen Motorkühler 34 und Verbrennungsmotor 12 zirkuliert und einen im Verbrennungsmotor 12 entstehende Wärmestrom an den Motorkühler 34 abführt.

Das Ladeluftsystem 14 dient unter anderem dazu, die von der Umgebung aufgenommene Ansaugluft zu verdichten, so dass eine erhöhte Luftmenge in das Einlasssystem 24 des Verbrennungsmotors 12 einströmt, wodurch eine verbesserte Verbrennung des Kraftstoffes erfolgt und damit die Emissionswerte des Abgasstromes 30 reduziert werden können. Das Ladeluftsystem 14 enthält einen Luftfilter 36 der eine aus der Umgebung aufgenommene Ansaugluft filtert und von dem aus die gefilterte Ansaugluft an einen Turbolader 38 geleitet wird. Der Turbolader 38 enthält eine Antriebsseite (nicht gezeigt) und eine Verdichterseite (nicht gezeigt). Die Antriebsseite des Turboladers 38 wird über einen Antriebsabgasstrom 40 angetrieben, wobei der Antriebsabgasstrom 40 ebenfalls von dem der Umgebung zugeführten Abgasstrom 30 abgezweigt wird. Die von dem Luftfilter 36 kommende Ansaugluft wird in der Verdichterseite des Turboladers 38 verdichtet. Die Verdichtung führt neben einer Zunahme der Dichte der Ansaugluft auch zu einer Erwärmung der Ansaugluft. Diese Erwärmung wiederum wirkt sich negativ auf die Verbrennung des Kraftstoffes aus, weshalb das Ladeluftsystem 14 in der Regel auch mit einem Ladeluftkühlsystem 16 verbunden ist. Das Ladeluftkühlsystem 16 enthält einen Ladeluftkühler 42 der über Ladeluftkühlmittelleitungen 44 mit einem Wärmetauscher 46 verbunden ist. Der Wärmetauscher 46 des Ladeluftkühlsystems 14 ist derart zwischen Turbolader 38 und Einlasssystem 24 positioniert, dass ein sich in den Ladeluftkühlmittelleitungen 44 befindliches Kühlmedium (nicht gezeigt) zwischen Wärmetauscher 46 und Ladeluftkühler 42 zirkuliert und einen aus der aufgeladenen Luft kommenden Wärmestrom an den Ladeluftkühler 42 abgeben kann.

Gemäß Fig. 1 enthält das Sorptionskühlsystem 22 eine im rückgeführten Abgasstrom 28 angeordnete Desorptionskammer 48, einen der Desorptionskammer 48 zugeordneten Kondensator 50 mit einem über Kondensatorkühlmittelleitungen 52 mit dem Kondensator 50 verbundenen Kondensatorkühler 54 zur Abfuhr der im Kondensator 50 frei werdenden Wärme, einen an den Ladeluftkühlmittelleitungen 44 angeordneten Verdampfer 56 sowie eine Sorptionskammer 58 mit einem über Sorbtionskammerkühlmittelleitungen 60 mit der Sorptionskammer 58 verbundenen Sorptionskammerkühler 62 zur Abfuhr der in der Sorptionskammer 58 frei werdenden Wärme.

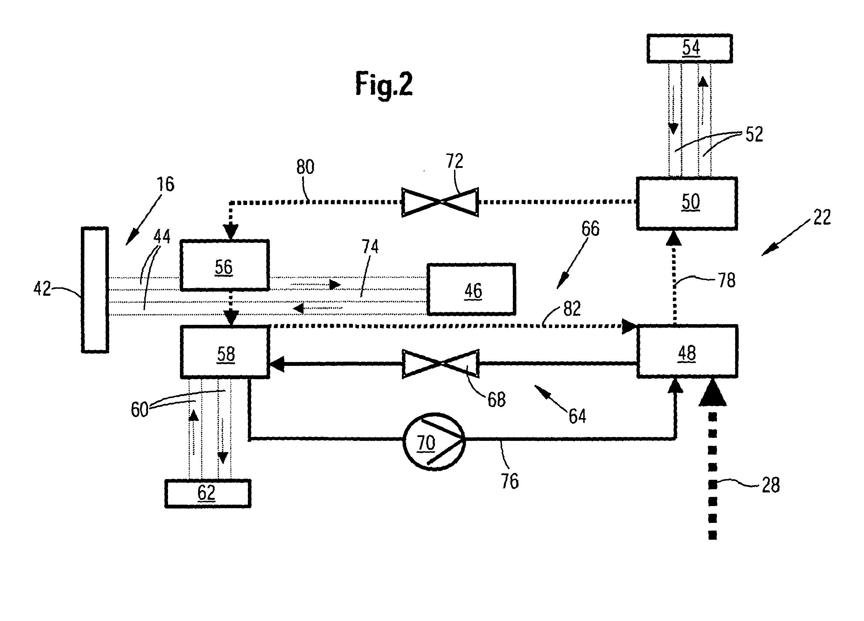

Die in der Figur 1 dargestellten Komponenten sind zum Teil auch in den Figuren 2 bis 5 enthalten. Für gleiche Komponenten werden daher in den Figuren 2 bis 5 die gleichen Bezugszeichen verwendet wie in Figur 1.

Anhand Figur 2 wird das Funktionsprinzip einer erfindungsgemäßen Kühlanordnung 10 gezeigt. Dabei steht das Sorptionssystem 22 im Vordergrund, wobei das Sorptionssystem 22 in dem in der Figur 2 dargestellten Ausführungsbeispiel zur Entlastung des Ladeluftkühlsystems 16 eingesetzt wird. Zur besseren Übersicht bei der Funktionsbeschreibung der Kühlanordnung 10 wird auf die Darstellung einiger in Figur 1 und Figur 3 bis 5 enthaltenen Komponenten in Figur 2 verzichtet.

Wie aus Figur 2 hervorgeht, enthält das Sorptionskühlsystem 22 einen Lösungsmittelkreislauf 64 und einen Kältemittelkreislauf 66. Der Lösungsmittelkreislauf 64 enthält die vom rückgeführten Abgasstrom 28 angetriebene Desorptionskammer 48, ein erstes Regelventil 68, die Sorptionskammer 58 sowie eine Lösungsmittelförderpumpe 70. Der Kältemittelkreislauf 66 enthält die vom rückgeführten Abgasstrom 28 angetriebene Desorptionskammer 48, den Kondensator 50, ein zweites Regelventil 72, den Verdampfer 56 sowie die Sorptionskammer 58. Des Weiteren sind der Kondensator 50 als auch die Sorptionskammer 58 mit jeweils einem Kühler 54, 62 verbunden, der die aus dem Kondensator 50 bzw. die aus der Sorptionskammer 58 abzuführende Wärmeleistung an die Umgebung abführt. Zur Entlastung des Ladeluftkühlsystems 16 wird der Verdampfer 56 des Sorptionskühlsystems 22 in den Ladeluftkühlkreislauf 74 des Ladeluftkühlsystems 16 integriert.

Die Beschreibung der Funktionsweise der Kühlanordnung 10 erfolgt ausgehend von dem im Lösungsmittelkreislauf 64 enthaltenden Zweistoffgemisch (nicht gezeigt), welches sich in der zur Desorptionskammer 48 gerichteten Zulaufleitung 76 befindet: Das in der Zulaufleitung 76 enthaltene Zweistoffgemisch besteht aus einem Lösungsmittel (nicht gezeigt), welches sich mit einem zur Kühlung eingesetzten und im Kältemittelkreislauf 66 zirkulierendes Kältemittel (nicht gezeigt) vermischt bzw. dieses in der Sorptionskammer 58 sorbiert hat. Das Zweistoffgemisch wird durch die Lösungsmittelförderpumpe 70 in die Desorptionkammer 48 gefördert. In der Desorptionskammer 48 erhitzt sich das Zweistoffgemisch aufgrund eines durch den rückgeführten Abgasstrom 28 in die Desorptionskammer 48 zugeführten Wärmestrom. Das von dem Lösungsmittel aufgenommene Kältemittel besitzt eine niedrigere Verdampfungstemperatur als das Lösungsmittel, woraufhin das Kältemittel verdampft, bevor das Lösungsmittel verdampft, was zur Desorption des Kältemittels aus dem Lösungsmittel führt. Der in der Desorptionskammer 48 desorbierte bzw. ausgetriebene Kältemitteldampf (nicht gezeigt) strömt durch eine erste Verbindungsleitung 78 in den Kondensator 50. Der Kältemitteldampf wird in dem Kondensator 50 verflüssigt, wobei der abzuführende Wärmestrom auf einem gegenüber einem konventionellen Kühlsystem höheren Temperaturniveau und mit hoher Temperaturdifferenz zwischen Kondensatorkühler 54 und Kondensator 50 abgeführt wird. Das kondensierte bzw. abgekühlte Kältemittel strömt über eine mit dem zweiten Regelventil 72 gesteuerte Zuführleitung 80 in den Verdampfer 56. In dem Verdampfer wird unter Aufnahme von Wärme aus dem Ladeluftkühlsystem 16 das Kältemittel verdampft. Die durch den Verdampfer 56 bzw. durch das Kältemittel aufgenommene Wärme wird somit effektiv dem Ladeluftkühlsystem 16 entzogen. Dies führt zu dem eigentlichen Nutzen der erfindungsgemäßen Kälteanordnung 10, da auf diese Weise das Ladeluftkühlsystem 16 entlastet werden kann und somit entweder die Kühlkapazität des Ladeluftkühlsystems 16 verbessert oder die konstruktiven Ausmaße des Ladeluftkühlsystems 16 verringert werden können. Der aus dem Verdampfer 56 strömende Kältemitteldampf strömt in die Sorptionskammer 58. Das in dem Lösungsmittelkreislauf 64 zirkulierende Lösungsmittel strömt über das erste Regelventil 68 in die Sorptionskammer 58 und steht zur Aufnahme bzw.

Sorption des Kältemitteldampfes bereit. In der Sorptionskammer wird der Kältemitteldampf von dem Lösungsmittel aufgenommen bzw. sorbiert, wodurch Lösungswärme entsteht, die über den Sorptionskühler 62 abgeführt wird. Das aus dem Verdampfer 56 strömende nicht verdampfte bzw. noch flüssige Kältemittel wird über eine weitere Zulaufleitung 82 über die Desorptionskammer 48 geführt und in den Kondensator 50 getrieben. Damit sind beide Kreisläufe, d. h. der Kältemittelkreislauf 66 und der Lösungsmittelkreislauf 64 geschlossen. Als Folge der verbesserten Kühlleistung gegenüber der Ladeluft kann aufgrund niedrigerer Verbrennungstemperaturen im Einlasssystem 24 des Verbrennungsmotors 12 ein verbessertes Emissionsergebnis erzielt werden.

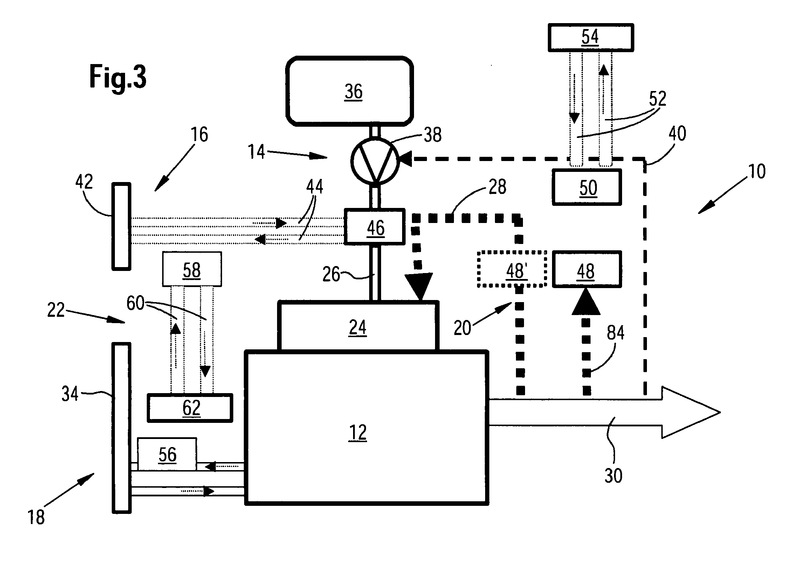

Gemäß des in Figur 2 dargestellten Funktionsprinzips der Kühlanordnung 10 kann das Sorptionkühlsystem 22 auch zur Entlastung anderer Hauptkühlsysteme oder auch zur Kühlung des rückgeführten Abgases 48 eingesetzt werden. Dies geht aus den Figuren 3 bis 5 hervor.

In einem zweiten erfindungsgemäßen Ausführungsbeispiel, wird der Verdampfer 56, wie in Fig. 3 dargestellt, in das Verbrennungsmotorkühlsystem 18 integriert. Die Wärmeabfuhr aus dem Verbrennungsmotorkühlsystem 18 bzw. die Entlastung des Verbrennungsmotorkühlsystems 18 erfolgt dabei auf gleiche Weise durch den Verdampfer 56, wie auch bei der Entlastung des Ladeluftkühlsystems 16 aus Figur 1 bzw. 2. Bei der in Figur 3 dargestellten Ausführungsform, wurde dem Abgasstrom 30 ein für den Antrieb der Desorptionskammer gesonderter Abgasstrom 84 abgezweigt. Denkbar ist hier aber auch die in Figur 1 bis 2 dargestellte Ausführungsform, in der die Desorptionskammer 48 von dem rückgeführten Abgasstrom 28 angetrieben wird, wie es in Figur 3 mit einer von dem rückgeführten Abgasstrom angetriebenen Desorptionskammer 48' dargestellt ist. Des Weiteren wird hier deutlich, dass eine erfindungsgemäße Ausführungsform auch ohne Ladeluftsystem 16 und ohne Abgasrückführsystem 20 denkbar ist. Ähnlich wie auch bei dem Ladeluftkühlsystem 16 aus Figur 1 bis 2 führt die Ausführungsform aus Figur 3 zu einer Entlastung des Verbrennungsmotorkühlsystems 18 wodurch entweder die Kühlkapazität des Verbrennungsmotorkühlsystems 18 verbessert oder die konstruktiven Ausmaße des Verbrennungsmotorkühlsystems 18 verringert werden können.

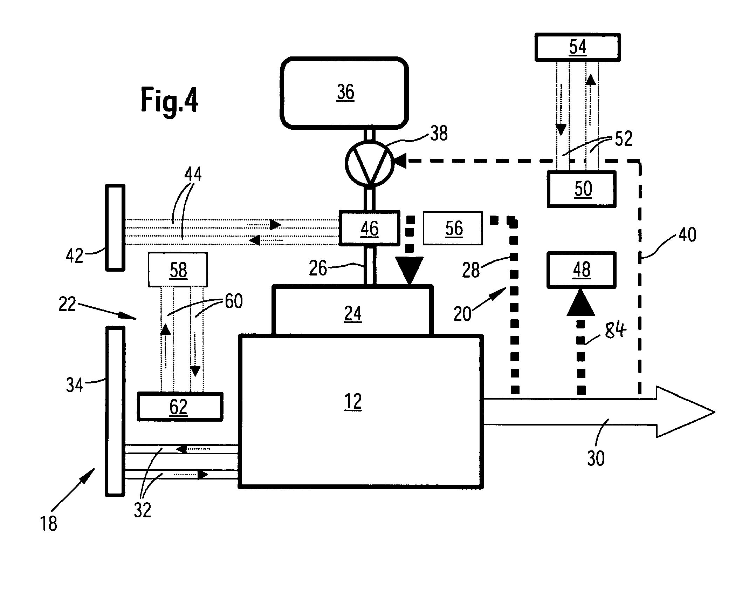

In einer weiteren erfindungsgemäßen Ausführungsform der Erfindung, wie sie in Figur 4 dargestellt wird, kann das Sorptionskühlsystem 10 zur Kühlung des rückgeführten Abgasstroms 28 eingesetzt werden, wodurch verbesserte Verbrennungswerte des Verbrennungsmotors 12 erzielt werden und damit auch das Verbrennungsmotorkühlsystem 18 und das Ladeluftkühlsystem 16 entlastet bzw. die gesamte Energiebilanz des Verbrennungsmotors 12 verbessert werden können. Wird der rückgeführte Abgasstrom 28 ungekühlt in das Einlasssystem 24 des Verbrennungsmotors 12 geleitet, erfolgt eine Erwärmung der zuvor durch das Ladeluftkühlsystem 16 gekühlten Ladeluft. Dies wiederum führt zu schlechteren Emissionswerten des Verbrennungsmotors 12. Zur Kühlung des rückgeführten Abgasstroms 28 wird der Verdampfer 56 gemäß Figur 4 in das Abgasrückführsystem 20 integriert und bei der Verdampfung des Kältemittels im Verdampfer 56 dem rückgeführten Abgasstrom 28 Wärme entzogen. Gemäß Figur 4 wird auch wie es in Figur 3 dargestellt ist, der gesonderte Abgasstrom 84 zum Antrieb der Desorptionskammer 48 genutzt.

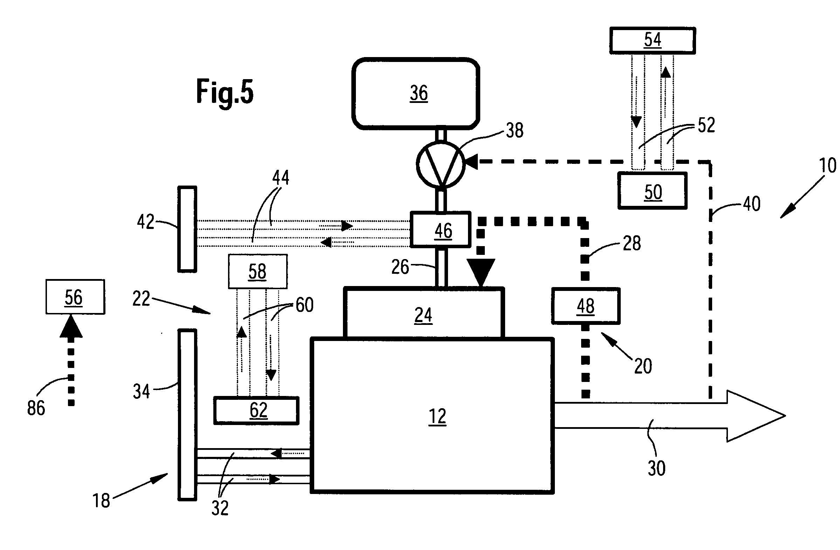

In einem weiteren erfindungsgemäßen Ausführungsbeispiel, wird der Verdampfer 56 in einem Klimatisierungskühlsystem (nicht dargestellt) integriert, wie es in Figur 5 dargestellt ist. Ein von einem herkömmlichen mechanisch angetriebenen Kompressor (nicht gezeigt) vorgekühlter Kabinenluftstrom 86 kann auf diese Weise nachgekühlt werden oder, bei umgekehrter Anordnung auch durch den Verdampfer 56 vorgekühlt und durch den Kompressor nachgekühlt werden. Die Anordnung der anderen Komponenten der Kälteanordnung kann dabei, wie in Figur 5 dargestellt, analog zu den in Figur 1 bis 4 dargestellten Ausführungsformen erfolgen. Die Entlastung des Klimatisierungssystems durch das Sorptionskühlsystem führt zu kleineren Baugrößen des mechanisch angetriebenen Kompressors und damit auch zu geringeren mechanischen Energieaufwendungen für das Klimatisierungssystem.

Die anhand der Figuren 1 bis 5 gezeigten Sorptionskühlsysteme lassen sich auch miteinander kombinieren, indem beispielsweise mehrere parallel oder in Reihe geschaltete Verdampfer vorgesehen sind, die der Kühlung der Ladeluft, des rückgeführten Abgases 28, des Verbrennungsmotorkühlwassers und/oder des Kabinenluftstromes 86 dienen.

Auch wenn die Erfindung lediglich anhand einiger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter den Gegenstand der Ansprüche der vorliegenden Erfindung fallen.

## Patentansprüche

1. Kühlanordnung für ein mit einem Verbrennungsmotor (12) betriebenes landwirtschaftliches Fahrzeug, vorzugsweise für einen Schlepper, mit wenigstens einem ein Kühlmedium enthaltendes Hauptkühlsystem (16, 18), einem an sich bekannten Sorptionskühlsystem (22), welches wenigstens einen Verdampfer (56) für ein zu verdampfendes Kältemittel, eine ein Sorbens enthaltende Sorbtionskammer (58) zur Sorption des Kältemitteldampfes, eine Desorptionskammer (48) zur Desorption des Kältemittels aus dem Sorbens und einen Kondensator (50) zur Kondensation des Kältemittels enthält, wobei zur Bereitstellung der zur Desorption erforderlichen Wärme wenigstens ein erster Abgasstrom (28, 84) des Verbrennungsmotors (12) der Desorptionskammer (48) zugeführt wird und der Verdampfer (56) zur zusätzlichen Kühlung des Kühlmediums des wenigstens einen Hauptkühlsystems (16, 18) und/oder zur Kühlung eines Kabinenluftstroms (86) in einem als Klimatisierungssystem ausgebildeten Hauptkühlsystem und/oder zur Kühlung eines zweiten Abgasstroms (28) des Verbrennungsmotors verwendet wird, **dadurch gekennzeichnet, dass** der erste Abgasstrom des Verbrennungsmotors (12) ein Abgasstrom (28) eines Abgasrückführsystems (20) ist.

2. Kühlanordnung nach Anspruch 1, **dadurch gekennzeichnet, dass** der erste Abgasstrom des Verbrennungsmotors (12) ein dem an die Umgebung abgegebenen Abgasstrom (30) abgezweigter Abgasstrom (84) ist.

3. Kühlanordnung nach einem der vorhergehenden Ansprüche, **dadurch gekennzeichnet, dass** das Hauptkühlsystem ein Ladeluftkühlsystem (16) ist und der Verdampfer (56) des Sorptionskühlsystems (22) zur zusätzlichen Kühlung des Ladeluftkühlsystems (16) verwendet wird.

4. Kühlanordnung nach einem der vorhergehenden Ansprüche, **dadurch gekennzeichnet, dass** das Hauptkühlsystem ein Verbrennungsmotorkühlsystem (18) ist und der Verdampfer (56) des Sorptionskühlsystems (22) zur zusätzlichen Kühlung des Verbrennungsmotorkühlsystems (18) verwendet wird.

5. Kühlanordnung nach einem der vorhergehenden Ansprüche, **dadurch gekennzeichnet, dass** der zweite Abgasstrom des Verbrennungsmotors (12) ein Abgasstrom eines Abgasrückführsystems (28) ist und der Verdampfer (56) des Sorptionskühlsystems (22) zur Kühlung des Abgasstroms (28) des Abgasrückführsystems (20) verwendet wird.

6. Kühlanordnung nach einem der vorhergehenden Ansprüche, **dadurch gekennzeichnet, dass** der Kondensator (50) mit einem Kühler (54) verbunden ist, mit dem die im Kondensator (50) freigesetzte Wärme abführbar ist.

7. Kühlanordnung nach einem der vorhergehenden Ansprüche, **dadurch gekennzeichnet, dass** die Sorptionskammer (58) mit einem Kühler (62) verbunden ist, mit dem die in der Sorptionskammer (58) freigesetzte Wärme abführbar ist.

## Claims

1. Cooling arrangement for an agricultural vehicle which is operated with an internal combustion engine (12), preferably for a tractor, having at least one main cooling system (16, 18) which contains a cooling medium, and having a sorption cooling system (22) which is known *per se* and which contains at least one evaporator (56) for a refrigerant which is to be evaporated, a sorption chamber (58), which contains sorbet, for sorption of the refrigerant vapour, a desorption chamber (48) for the desorption of the refrigerant out of the sorbet, and a condenser (50) for condensing the refrigerant, with at least one first exhaust gas flow (28, 84) of the internal combustion engine (12) being supplied to the desorption chamber (48) in order to provide the heat required for desorption, and the evaporator (56) being used for additional cooling of the cooling medium of the at least one main cooling system (16, 18) and/or for cooling a cabin air flow (86) in a main cooling system which is embodied as an air-conditioning system and/or for cooling a second exhaust gas flow (28) of the internal combustion engine, **characterized in that** the first exhaust gas flow of the internal combustion engine (12) is an exhaust gas flow (28) of an exhaust gas recirculation system (20).

2. Cooling arrangement according to Claim 1, **characterized in that** the first exhaust gas flow of the internal combustion engine (12) is an exhaust gas flow (84) which is branched off from the exhaust gas flow (30) which is discharged to the environment.

3. Cooling arrangement according to one of the preceding claims, **characterized in that** the main cooling system is a charge-air cooling system (16) and the evaporator (56) of the Sorption cooling system (22) is used for additional cooling of the charge-air cooling system (16).

4. Cooling arrangement according to one of the preceding claims, **characterized in that** the main cooling system is an internal combustion engine cooling system (18), and the evaporator (56) of the sorption cooling system (22) is used for additional cooling of the internal combustion engine cooling system (18).

5. Cooling arrangement according to one of the preceding claims, **characterized in that** the second exhaust gas flow of the internal combustion engine (12) is an exhaust gas flow of an exhaust gas recirculation system (28), and the evaporator (56) of the sorption cooling system (22) is used for cooling the exhaust gas flow (28) of the exhaust gas recirculation system (20).

6. Cooling arrangement according to one of the preceding claims, **characterized in that** the condenser (50) is connected to a cooler (54) by means of which the heat which is released in the condenser (50) can be dissipated.

7. Cooling arrangement according to one of the preceding claims, **characterized in that** the sorption chamber (58) is connected to a cooler (62) by means of which the heat which is released in the sorption chamber (58) can be dissipated.

## Revendications

1. Dispositif de refroidissement pour un véhicule agricole actionné par un moteur à combustion interne (12), de préférence pour un tracteur, comportant au moins un système de refroidissement principal (16, 18) contenant un fluide de refroidissement, un système de refroidissement par sorption (22) connu en principe, qui comporte au moins un évaporateur (56) pour un réfrigérant à évaporer, une chambre de sorption (58) contenant un agent de sorption pour la sorption de la vapeur du réfrigérant, une chambre de désorption (48) pour la désorption du réfrigérant hors de l'agent de sorption, et un condenseur (50) pour la condensation du réfrigérant, au moins un premier flux de gaz d'échappement (28, 84) du moteur à combustion interne (12) étant acheminé vers la chambre de désorption (48) pour fournir la chaleur nécessaire à la désorption, et l'évaporateur (56) étant utilisé pour le refroidissement supplémentaire du fluide de refroidissement d'au moins un système de refroidissement principal (16, 18) et/ou pour le refroidissement d'un flux d'air de cabine (86) dans un système de refroidissement principal, réalisé sous la forme d'un système de climatisation, et/ou pour le refroidissement d'un deuxième flux de gaz d'échappement (28) du moteur à combustion interne, **caractérisé en ce que** le premier flux de gaz d'échappement du moteur à combustion interne (12) est un flux de gaz d'échappement (28) d'un système de renvoi des gaz d'échappement (20).

2. Dispositif de refroidissement selon la revendication 1, **caractérisé en ce que** le premier flux de gaz d'échappement du moteur à combustion interne (12) est un flux de gaz d'échappement (84) dérivé du flux de gaz d'échappement (30) évacué à l'air libre.

3. Dispositif de refroidissement selon l'une quelconque des revendications précédentes, **caractérisé en ce que** le système de refroidissement principal est un système de refroidissement d'air de suralimentation (16) et l'évaporateur (56) du système de refroidissement par sorption (22) est utilisé pour le refroidissement supplémentaire du système de refroidissement d'air de suralimentation (16).

4. Dispositif de refroidissement selon l'une quelconque des revendications précédentes, **caractérisé en ce que** le système de refroidissement principal est un système de refroidissement du moteur à combustion interne (18) et l'évaporateur (56) du système de refroidissement par sorption (22) est utilisé pour le refroidissement supplémentaire du système de refroidissement du moteur à combustion interne (18).

5. Dispositif de refroidissement selon l'une quelconque des revendications précédentes, **caractérisé en ce que** le deuxième flux de gaz d'échappement du moteur à combustion interne (12) est un flux de gaz d'échappement (28) d'un système de renvoi des gaz d'échappement (20) et l'évaporateur (56) du système de refroidissement par sorption (22) est utilisé pour le refroidissement du flux de gaz d'échappement (28) du système de renvoi des gaz d'échappement (20).

6. Dispositif de refroidissement selon l'une quelconque des revendications précédentes, **caractérisé en ce que** le condenseur (50) est relié à un radiateur (54), par lequel est évacuée la chaleur dégagée dans le condenseur (50).

7. Dispositif de refroidissement selon l'une quelconque des revendications précédentes, **caractérisé en ce que** la chambre de sorption (58) est reliée à un radiateur (62), par lequel est évacuée la chaleur dégagée dans la chambre de sorption (58).
